# EUROPÄISCHE PATENTSCHRIFT

(11) **EP 1 937 528 B1**
(45) Veröffentlichungstag und Bekanntmachung des Hinweises auf die Patenterteilung: **15.12.2010**
(21) Anmeldenummer: 06807222.2
(22) Anmeldetag: 12.10.2006
(51) Int. Cl.: B60T 8/36, B60T 7/04, G01P 3/48, B60T 8/88, B60T 8/94, B60T 17/22, B60T 7/12, B60T 13/66

(54) **BREMSANLAGE FÜR KRAFTFAHRZEUGE**
BRAKE SYSTEM FOR MOTOR VEHICLES
SYSTEME DE FREINAGE POUR VEHICULES AUTOMOBILES

(30) Priorität: 12.10.2005 DE 102005049298; 12.10.2006 DE 102006048787
(43) Veröffentlichungstag der Anmeldung: 02.07.2008
(73) Patentinhaber: Continental Teves AG & Co. oHG, 60488 Frankfurt (DE)
(72) Erfinder: GIERS, Bernhard, 65812 Bad Soden (DE); FACHINGER, Georg, 65549 Limburg/Lahn (DE); FÜHRER, Jochen, 64287 Darmstadt (DE); ULLRICH, Thorsten, 64579 Gernsheim (DE)
(86) Internationale Anmeldenummer: PCT/EP2006/067357
(87) Internationale Veröffentlichungsnummer: WO 2007/042561

(56) Entgegenhaltungen:
- WO-A-2004/005095
- WO-A-2005/012057
- DE-A1- 4 424 270
- DE-A1- 10 248 081
- DE-A1- 19 807 366
- DE-A1- 19 815 440
- DE-A1-102004 058 996

## Beschreibung

Die Erfindung betrifft eine Bremsanlage für Kraftfahrzeuge mit:
einer Betätigungseinheit, die aus einem sowohl mittels eines Bremspedals betätigbaren, als auch unabhängig vom Fahrerwillen ansteuerbaren Bremskraftverstärker sowie einem dem Bremskraftverstärker nachgeschalteten Hauptbremszylinder besteht,
an den Radbremsen eines Kraftfahrzeugs angeschlossen sind, Mitteln zum Erfassen eines Fahrerverzögerungswunsches, einer hydraulischen Steuer- und Regeleinheit zur Durchführung von fahrdynamischen Steuer- und Regelvorgängen (ABS, ESP, ASR...), die zwischen dem Hauptbremszylinder und den Radbremsen geschaltet ist und mindestens eine hydraulische Pumpe aufweist,
einer ersten elektronischen Steuer- und Regeleinheit, die der Betätigungseinheit zugeordnet ist und die der Ansteuerung des Bremskraftverstärkers dient, sowie
einer zweiten elektronischen Steuer- und Regeleinheit, die der hydraulischen Steuer- und Regeleinheit zugeordnet ist und die der Ansteuerung deren Komponenten dient.

Eine derartige Bremsanlage ist z. B. aus der internationalen Patentanmeldung der Anmelderin WO 2004/005095 A1 bekannt. Das Besondere an der vorbekannten Bremsanlage besteht darin, dass Mittel zur Entkopplung einer kraftübertragenden Verbindung zwischen dem Bremspedal und dem Bremskraftverstärker vorgesehen sind. Durch diese Maßnahme wird erreicht, dass die in dem genannten Dokument offenbarte Bremsanlage in der Betriebsart "Brake-by-wire" betrieben werden kann, wobei außerdem ein mit dem Bremspedal zusammenwirkender Pedalwegsimulator vorgesehen ist, durch den in der Betriebsart "Brake-by-wire" eine auf das Bremspedal wirkende Rückstellkraft unabhängig von einer Betätigung des Bremskraftverstärkers simulierbar ist und der somit dem Fahrzeugführer das gewöhnliche, angenehme Bremspedalgefühl vermittelt. Der genannten Veröffentlichung sind jedoch keine Maßnahmen entnehmbar, mit deren Hilfe eine Übertragung von prozessrelevanten Daten zwischen den beiden elektronischen Steuer- und Regeleinheiten durchgeführt werden könnte.

Es ist daher Aufgabe der vorliegenden Erfindung, geeignete Maßnahmen vorzuschlagen, die eine Vernetzung der beiden elektronischen Steuer- und Regeleinheiten ermöglichen.

Diese Aufgabe wird gemäß dem kennzeichnenden Teil des Patentanspruchs dadurch gelöst, dass die erste elektronischen Steuer- und Regeleinheit Mittel aufweist, die der zweiten elektronischen Steuer- und Regeleinheit einen Sollwert des in der Bremsanlage einsteuerbaren hydraulischen Druckes zusammen mit einer Anforderung zur Aktivierung der hydraulischen Steuer- und Regeleinheit zur Verfügung stellt.

Vorteilhafte Weiterbildungen der erfindungsgemäßen Bremsanlage sind in den Unteransprüchen 2 bis 16 aufgeführt.

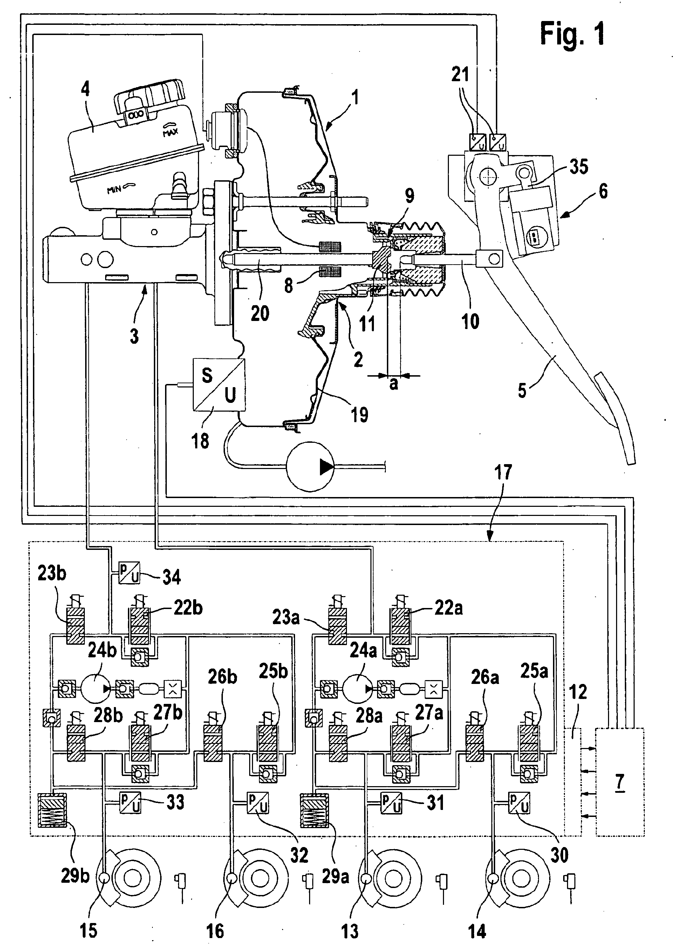

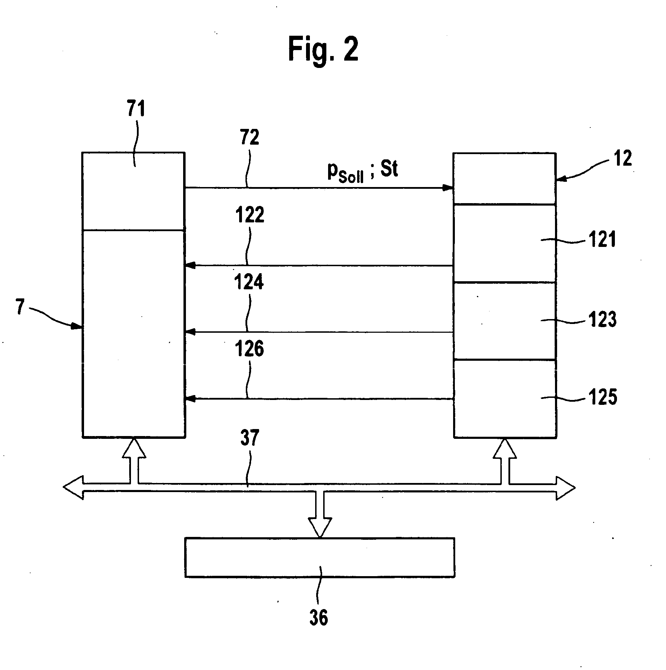

Weitere Merkmale und Vorteile der Erfindung werden in der nachfolgenden Beschreibung unter Bezugnahme auf die beiliegende Zeichnung näher erläutert, in der Fig. 1 eine schematische Darstellung der erfindungsgemäßen Bremsanlage und Fig. 2 die Art der Kommunikation zwischen den in Fig. 1 angedeuteten elektronischen Steuer- und Regeleinheiten zeigen.

Die in Fig. 1 der Zeichnung gezeigte Kraftfahrzeugbremsanlage, die vorzugsweise in der Betriebsart "Brake-by-wire" betrieben werden kann, besteht im Wesentlichen aus einer Betätigungseinheit 1, einer hydraulischen Steuer- und Regeleinheit (HCU) 17, an die hydraulische Steuer- und Regeleinheit (HCU) 17 angeschlossene Fahrzeugradbremsen 13, 14, 15, 16, einer der Betätigungseinheit 1 zugeordnete erste elektronische Steuer- und Regeleinheit 7 sowie einer der hydraulischen Steuer- und Regeleinheit (HCU) 17 zugeordnete zweite elektronische Steuer- und Regeleinheit 12. Die Betätigungseinheit 1 besteht ihrerseits aus einem Bremskraftverstärker, vorzugsweise einem Unterdruckbremskraftverstärker 2, einem dem Bremskraftverstärker 2 nachgeschalteten Hauptbremszylinder, vorzugsweise einem Tandemhauptzylinder 3, an dessen nicht dargestellte Druckräume unter Zwischenschaltung der hydraulischen Steuer- und Regeleinheit 17 die vorhin genannten Radbremsen 13, 14, 15, 16 angeschlossen sind, sowie einem dem Hauptbremszylinder 3 zugeordneten Druckmittelvorratsbehälter 4. Der Betätigung des Bremskraftverstärkers 2 durch den Fahrer dient ein Bremspedal 5, wobei ein mit dem Bremspedal 5 insbesondere in der Betriebsart "Brake-by-wire" zusammenwirkender Pedalwegsimulator 6 vorgesehen ist, der dem Fahrer das gewöhnliche Bremspedalgefühl vermittelt. Ein Fahrerverzögerungswunsch bzw. der Betätigungsweg des Bremspedals 5 wird mittels mindestens einer Sensoreinrichtung 21 erfasst, deren Signale der vorhin erwähnten ersten elektronischen Steuereinheit 7 zugeführt werden. Durch die Ausgangssignale der ersten elektronischen Steuereinheit 7 ist u. a. ein dem Bremskraftverstärker 2 zugeordneter Elektromagnet 8 ansteuerbar, der eine vom Fahrerwillen unabhängige Betätigung eines pneumatischen Steuerventils 9 ermöglicht, das eine Luftzufuhr zum Bremskraftverstärker 2 steuert. Wie in der nachfolgenden Beschreibung ausführlich erläutert wird, enthält die erste elektronische Steuer- und Regeleinheit 7 eine Regelschaltung zur Regelung einer charakteristischen Größe des Bremskraftverstärkers 3, vorzugsweise des von einem Ausgangsglied 20 des Bremskraftverstärkers 2 zurück gelegten Weges und/oder zur Regelung des im System herrschenden hydraulischen Druckes.

Ein zwischen dem Ende einer mit dem Bremspedal 1 gekoppelten Kolbenstange 10 und einem Ventilkolben 11 des vorhin genannten Steuerventils 9 vorgesehener axialer Spalt "a" gewährleistet in der Betriebsart "Brake-by-wire" eine Entkopplung der kraftübertragenden Verbindung zwischen dem Bremspedal 5 und dem Bremskraftverstärker 2. Ein Wegsensor 18 dient der Erfassung des Weges einer die Verstärkungskraft des Bremskraftverstärkers 2 aufbringenden beweglichen Wand 19 bzw. des Weges des oben erwähnten Ausgangsglieds 20 des Bremskraftverstärkers 2, das seine Ausgangskraft auf einen nicht dargestellten ersten Kolben des Hauptbremszylinders 3 überträgt. Außerdem ist in der hydraulischen Regeleinheit 17 ein Drucksensor 34 integriert, der den im System herrschenden hydraulischen Eingangsdruck erfasst.

Der Pedalwegsimulator 6, durch den, wie bereits erwähnt, in der Betriebsart "Brake-by-wire" eine auf das Bremspedal 5 wirkende Rückstellkraft unabhängig von einer,Betätigung des Bremskraftverstärkers 2 simulierbar ist, ist derart ausgeführt, dass er in der Betriebsart "Brake-by-wire" bei der Entkopplung der kraftübertragenden Verbindung zwischen dem Bremspedal 5 und dem Bremskraftverstärker 2 zuschaltbar und außerhalb der Betriebsart "Brake-by-wire" abschaltbar ist. Die Betätigung des Pedalwegsimulators 6 erfolgt mittels eines am Bremspedal 1 angelenkten Betätigungsgliedes 35.

Außerdem ist der Zeichnung zu entnehmen, dass die hydraulische Steuer- und Regeleinheit (HCU) 17 sämtliche hydraulischen sowie elektrohydraulischen Komponenten aufweist, die zur Durchführung von Bremsdruckregelvorgängen wie ABS, ASR, ESP... erforderlich sind. Dazu gehören pro Bremskreis: jeweils ein Trennventil 22a, b, ein elektrisches Umschaltventil 23a, b, eine hydraulische Pumpe 24a, b, jeweils zwei elektrisch ansteuerbare Druckregelvehtile bzw. Einlass- und Auslassventile 25a, b, 26a, b, 27a, b und 28a, b zur selektiven Einstellung des Bremsdruckes an den Radbremsen 13 - 16, jeweils ein Niederdruckspeicher 29a, b sowie den Radbremsen 13 - 16 zugeordnete Drucksensoren 30 - 33.

Wie aus der vorher gehenden Beschreibung erhellt, wird bei einer Betätigung des Bremskraftverstärkers 2 ein hydraulischer Druck im Hauptbremszylinder 3 aufgebaut. Es ist jedoch bekannt, dass der erwähnte Druckaufbau der erreichbare Maximaldruck durch den sog. Aussteuerpunkt begrenzt ist, der von dem zur Verfügung stehenden Unterdruckniveau abhängig ist. Werden Drücke oberhalb dieses Aussteuerpunktes angefordert, erfolgt eine Druckerhöhung in den Fahrzeugradbremsen 13 - 16 durch die hydraulische Steuer- und Regeleinheit 17 bzw. insbesondere durch ein Einschalten der Pumpen 24a, b. Um eine einwandfreie Funktion der erfindungsgemäßen Bremsanlage zu gewährleisten muss zwischen der ersten (7) und der zweiten Steuer- und Regeleinheit 12 ein Informations- bzw. Datenaustausch stattfinden können. Zum Zweck einer Vernetzung der beiden Steuer- und Regeleinheiten 7, 12 (s. insbesondere Fig. 2) weist die erste Steuer- und Regeleinheit 7 eine Signalübertragungseinrichtung 71 auf, die der zweiten Steuer- und Regeleinheit 12 einen Sollwert p_{Soll} des in den Radbremsen 13 - 16 einzusteuernden Druckes zusammen mit einer Aktivierungsanforderung (St) übermittelt, die dem Einschalten der hydraulischen Pumpen 24a, b entspricht. Kriterien zur Übermittlung des vorhin erwähnten Sollwerts p_{Soll} sind der Wert des angeforderten Druckes, der vorzugsweise in der Nähe des hydraulischen Drucks liegt, der dem Aussteuerpunkt des Bremskraftverstärkers 2 entspricht, oder der Anstiegsgradient des Solldrucks. Der entsprechende Signalweg ist in Fig. 2 mit dem Bezugszeichen 72 bezeichnet. Bei einem teilweisen Ausfall der Betätigungseinheit 1 bzw. der ersten Steuer- und Regeleinheit 7 meldet diese den verfügbaren Maximalwert des Druckes im Hauptbremszylinder 3 an die zweite elektronische Steuer- und Regeleinheit 12. Die zweite elektronische Steuer- und Regeleinheit 12 nutzt diese Information, um ihrerseits durch eine geeignete Verstärkung eine Druckerhöhung in den Radbremsen 13 - 16 vorzunehmen. Dieser Betriebsmodus wird von der ersten elektronischen Steuer-und Regeleinheit 7 durch Setzen eines festgelegten Wertes der Aktivierungsanforderungs-information (St) angezeigt. Im dargestellten Ausführungsbeispiel handelt es sich bei dem Druck-Maximalwert um den Druckwert um den Aussteuerpunkt. Die Sollwertbildung zur Druckerhöhung in den Radbremsen 13 - 16 erfolgt in der zweiten elektronischen Steuer- und Regeleinheit 12 anhand eines intern gemessenen Druckes im Hauptbremszylinder 3.

Die zweite Steuer- und Regeleinheit 12 weist eine erste Signalübertragungseinrichtung 121 auf, die der ersten elektronischen Steuer- und Regeleinheit 7 die Verfügbarkeit der Betriebsbereitschaft der hydraulischen Steuer- und Regeleinheit 17 bzw. der hydraulischen Pumpen 24a, b meldet. Die Meldung erfolgt über einen Signalweg, der in Fig. 2 mit dem Bezugszeichen 122 bezeichnet ist. Die erste Steuer- und Regeleinheit 7 nutzt in dem Fall, wenn die Betriebsbereitschaft des genannten Subsystems nicht verfügbar ist, diese Informationen zur Festlegung einer geeigneten Rückfallebene und ggf. zur Bildung einer Fahrerwarnung. Die Rückfallebene entspricht bei dem beschriebenen Ausführungsbeispiel der Betätigung der Betätigungseinheit 1 durch die Muskelkraft des Fahrers mit Unterdruckunterstützung, wobei lediglich die aktive Ansteuerung bzw. Fremdansteuerung des Bremskraftverstärkers 2 nicht mehr statt findet.

Darüber hinaus sendet die zweite elektronische Steuer-und Regeleinheit 12 mittels einer zweiten

Signalübertragungseinrichtung 123 über einen Signalübertragungsweg 124 eine Meldung über die Aktivität und den Ausfall der hydraulischen Steuer- und Regeleinheit 17 an die erste elektronische Steuer- und Regeleinheit 7, wobei es sich um die Aktivität oder den Ausfall von Fahrdynamikregelfunktionen wie ABS, ESP ... handelt. Wenn die beschriebene Bremsanlage bei einem Kraftfahrzeug eingesetzt wird, das mit einem Hybridantrieb ausgestattet ist, passt die erste elektronische Steuer- und Regeleinheit 7 ihre Strategie zur Einbeziehung von vom Hybridantrieb erzeugten, generatorischen Bremsmomenten an. Eine Schnittstelle, mittels der eine Kommunikation zwischen den beiden elektronischen Steuer- und Regeleinheiten 7, 12 und der Antriebssteuerung 36 des Hybridantriebs statt findet, trägt in Fig. 2 das Bezugszeichen 37.

Schließlich weist die zweite elektronische Steuer- und Regeleinheit 12 eine dritte Signalübertragungseinrichtung 125 auf, die über einen Signalübertragungsweg 126 Informationen über die aktuelle Fahrzeuggeschwindigkeit sowie den Fahrzeugstillstand an die erste elektronische Steuer- und Regeleinheit 7 meldet. Die erste elektronische Steuer- und Regeleinheit 7 nutzt diese Information zur Optimierung der Regelung des Druckes im Hauptbremszylinder 3. Als Beispiele solcher Optimierungen sind die Begrenzung des Druckes und/oder der Druckaufbaugeschwindigkeit im Stillstand bzw. bei geringen Geschwindigkeiten sowie eine zusätzliche Erhöhung von Druck und/oder der Druckaufbaugeschwindigkeit bei hohen Fahrzeuggeschwindigkeiten zu erwähnen.

## Patentansprüche

1. Bremsanlage für Kraftfahrzeuge mit:
einer Betätigungseinheit (1), die aus einem sowohl mittels eines Bremspedals (5) betätigbaren, als auch unabhängig vom Fahrerwillen ansteuerbaren Bremskraftverstärker (2) sowie einem dem Bremskraftverstärker (2) nachgeschalteten Hauptbremszylinder (3) besteht, an den Radbremsen (13, 14, 15, 16) eines Kraftfahrzeugs angeschlossen sind, Mitteln (21) zum Erfassen eines Fahrerverzögerungswunsches, einer hydraulischen Steuer- und Regeleinheit (HECU) (17) zur Durchführung von fahrdynamischen Steuer- und Regelvorgängen (ABS, ESP, ASR...), die zwischen dem Hauptbremszylinder (3) und den Radbremsen (13, 14, 15, 16) geschaltet ist und mindestens eine hydraulische Pumpe (24a, b) aufweist, einer ersten elektronischen Steuer- und Regeleinheit (7), die der Betätigungs-einheit (1) zugeordnet ist und die der Ansteuerung des Bremskraftverstärkers (2) dient, sowie einer zweiten elektronischen Steuer- und Regeleinheit (12), die der hydraulischen Steuer- und Regeleinheit (HCU) (17) zugeordnet ist und die der Ansteuerung deren Komponenten dient, **dadurch gekennzeichnet, dass** die erste elektronische Steuer- und Regeleinheit (7) Mittel (71, 72) aufweist, die der zweiten elektronischen Steuer-und Regeleinheit (17) einen Sollwert (p_{Soll}) des in der Bremsanlage einsteuerbaren hydraulischen Druckes zusammen mit einer Anforderung (St) zur Aktivierung der hydraulischen Steuer- und Regeleinheit (HCU) (17) zur Verfügung stellt.

2. Bremsanlage nach Anspruch 1 **dadurch gekennzeichnet, dass** der Sollwert (PSoll) einen Druckwert darstellt, der höher als der durch die Betätigungseinheit (1) erzeugbare Druckwert ist.

3. Bremsanlage nach Anspruch 1 oder 2 **dadurch gekennzeichnet, dass** die Aktivierung der hydraulischen Steuer- und Regeleinheit (HCU) (17) der Ansteuerung der hydraulischen Pumpe (24a, b) entspricht.

4. Bremsanlage nach einem der Ansprüche 1 bis 3 **dadurch gekennzeichnet, dass** die zweite elektronische Steuer-und Regeleinheit (12) Mittel (121, 122) aufweist, die der ersten elektronischen Steuer- und Regeleinheit (7) eine Meldung über die Verfügbarkeit der Betriebsbereitschaft der hydraulischen Pumpe (24a, b) vermitteln.

5. Bremsanlage nach Anspruch 4 **dadurch gekennzeichnet, dass** die erste elektronische Steuer- und Regeleinheit (7) die Meldung zur Festlegung einer Rückfallebene und ggf. zur Fahrerwarnung verwendet.

6. Bremsanlage nach Anspruch 5 **dadurch gekennzeichnet, dass** die Rückfallebene der Betätigung der Betätigungseinheit (1) durch die unterdruckunterstützte Muskelkraft des Fahrers entspricht.

7. Bremsanlage nach einem der Ansprüche 1 bis 6 **dadurch gekennzeichnet, dass** die zweite elektronische Steuer-und Regeleinheit (12) Mittel (123, 124) aufweist, die der ersten elektronischen Steuer- und Regeleinheit (7) eine Meldung über die Aktivität und den Ausfall der Komponenten der hydraulischen Steuer- und Regeleinheit (HCU) (17) vermitteln.

8. Bremsanlage nach Anspruch 7 **dadurch gekennzeichnet, dass** die erste elektronische Steuer- und Regeleinheit (7) die Meldung zur Anpassung ihrer Strategie zur Einbeziehung von durch einen Hybridantrieb des Kraftfahrzeugs erzeugbaren generatorischen Bremsmomenten verwendet.

9. Bremsanlage nach einem der Ansprüche 1 bis 8 **dadurch gekennzeichnet, dass** die zweite elektronische Steuer-und Regeleinheit (12) Mittel (125, 126) aufweist, die der ersten elektronischen Steuer- und Regeleinheit (7) eine Meldung über die aktuelle Fahrzeuggeschwindigkeit sowie den Fahrzeugstillstand vermitteln.

10. Bremsanlage nach Anspruch 9 **dadurch gekennzeichnet, dass** die erste elektronische Steuer- und Regeleinheit (7) die Meldung zur Optimierung des durch die Betätigungseinheit (1) erzeugten hydraulischen Druckes verwendet.

11. Bremsanlage nach Anspruch 10 **dadurch gekennzeichnet, dass** die erste elektronische Steuer- und Regeleinheit (7) im Stillstand bzw. bei geringen Fahrzeuggeschwindigkeiten den Druck und/oder die Druckaufbaugeschwindigkeit begrenzt.

12. Bremsanlage nach Anspruch 10 **dadurch gekennzeichnet, dass** die erste elektronische Steuer- und Regeleinheit (7) bei hohen Fahrzeuggeschwindig-keiten den Druck und/oder die Druckaufbaugeschwindigkeit zusätzlich verstärkt.

13. Bremsanlage nach einem der Ansprüche 1 bis 8-**dadurch gekennzeichnet, dass** die erste elektronische Steuer-und Regeleinheit (7) Mittel aufweist, die bei teilweisem Ausfall der Betätigungseinheit (1) der zweiten elektronischen Steuer- und Regeleinheit (12) eine Meldung über den verfügbaren Maximaldruck im Hauptbremszylinder (3) vermitteln.

14. Bremsanlage nach Anspruch 10 **dadurch gekennzeichnet, dass** der Bremskraftverstärker (2) ein pneumatischer Unterdruckbremskraftverstärker ist, und dass der Maximaldruck den Druckwert darstellt, der der Nähe des unterdruckabhängigen Aussteuerpunktes des Bremskraftverstärkers (2) entspricht.

15. Bremsanlage nach Anspruch 14 **dadurch gekennzeichnet, dass** die Bildung des Drucksollwerts zur Erhöhung des Druckes in den Radbremsen (13, 14, 15, 16) in der zweiten elektronischen Steuer- und Regeleinheit (12) anhand des durch die zweite elektronische Steuer- und Regeleinheit (12) ermittelten Druckwertes im Hauptbremszylinder (3) erfolgt.

16. Bremsanlage nach einem der Ansprüche 1 bis 15 **dadurch gekennzeichnet, dass** beim Einsatz der Bremsanlage bei einem mit einem Hybridantrieb ausgestatteten Fahrzeug eine Signalübertragung zwischen der ersten elektronischen Steuer- und Regeleinheit (7) mit der elektronischen Steuereinheit (36) des Hybridantriebs stattfindet.

## Claims

1. Brake system for motor vehicles, having:
an activation unit (1) which is composed of a brake booster (2) which can either be activated by means of a brake pedal (5) or actuated independently of the driver's will, and a master brake cylinder (3) which is connected downstream of the brake booster (2) and to which wheel brakes (13, 14, 15, 16) of a motor vehicle are connected, means (21) for detecting a driver-deceleration request, a hydraulic open-loop and closed-loop control unit (HECU) (17) for carrying out vehicle movement dynamics open-loop and closed-loop control processes (ABS, ESP, traction control system etc.) which is connected between the master brake cylinder (3) and the wheel brakes (13, 14, 15, 16), and has at least one hydraulic pump (24a, b), a first electronic open-loop and closed-loop control unit (7), which is assigned to the activation unit (1) and which serves to actuate the brake booster (2), and a second electronic open-loop and closed-loop control unit (12), which is assigned to the hydraulic open-loop and closed-loop control unit (HCU) (17) and serves to actuate the components thereof, **characterized in that** the first electronic open-loop and closed-loop control unit (7) has means (71, 72) which makes available to the second electronic open-loop and closed-loop control unit (17) a setpoint value (pₛₑₜₚ) of the hydraulic pressure which can be applied in the brake system, together with a request (St) for activating the hydraulic open-loop and closed-loop control unit (HCU) (17).

2. Brake system according to Claim 1, **characterized in that** the setpoint value (Psetp) constitutes a pressure value which is higher than the pressure value which can be generated by the activation unit (1).

3. Brake system according to Claim 1 or 2, **characterized in that** the activation of the hydraulic open-loop and closed-loop control unit (HCU) (17) corresponds to the actuation of the hydraulic pump (24a, b).

4. Brake system according to one of Claims 1 to 3, **characterized in that** the second electronic open-loop and closed-loop control unit (12) has means (121, 122) which provide the first electronic open-loop and closed-loop control unit (7) with a message about the availability of the operational readiness of the hydraulic pump (24a, b).

5. Brake system according to Claim 4, **characterized in that** the first electronic open-loop and closed-loop control unit (7) uses the message for defining a fallback level and, if appropriate, for warning the driver.

6. Brake system according to Claim 5, **characterized in that** the fallback level corresponds to the activation of the activation unit (1) by the underpressure-supported muscle force of the driver.

7. Brake system according to one of Claims 1 to 6, **characterized in that** the second electronic open-loop and closed-loop control unit (12) has means (123, 124) which provide the first electronic open-loop and closed-loop control unit (7) with a message about the activity and the failure of the components of the hydraulic open-loop and closed-loop control unit (HCU) (17).

8. Brake system as claimed in Claim 7, **characterized in that** the first electronic open-loop and closed-loop control unit (17) uses the message for adapting its strategy for including generator braking torques which can be generated by a hybrid drive of the motor vehicle.

9. Brake system according to one of Claims 1 to 8, **characterized in that** the second electronic open-loop and closed-loop control unit (12) has means (125, 126) which provide the first electronic open-loop and closed-loop control unit (7) with a message about the current speed of the vehicle and stationary state of the vehicle.

10. Brake system according to Claim 9, **characterized in that** the first electronic open-loop and closed-loop control unit (7) uses the message for optimizing the hydraulic pressure which is generated by the activation unit (1).

11. Brake system according to Claim 10, **characterized in that** the first electronic open-loop and closed-loop control unit (7) limits the pressure and/or the rate of build up of pressure in the stationary state or at low speeds of the vehicle.

12. Brake system according to Claim 10, **characterized in that** the first electronic open-loop and closed-loop control unit (7) additionally boosts the pressure and/or the rate of build up of pressure at high speeds of the vehicle.

13. Brake system according to one of Claims 1 to 8, **characterized in that** the first electronic open-loop and closed-loop control unit (7) has means which, given partial failure of the activation unit (1), provide the second electronic open-loop and closed-loop control unit (12) with a message about the available maximum pressure in the master brake cylinder (3).

14. Brake system according to Claim 10, **characterized in that** the brake booster (2) is a pneumatic underpressure-brake booster, and **in that** the maximum pressure represents the pressure value which corresponds to the proximity of the under-pressure-dependent modulation point of the brake booster (2).

15. Brake system according to Claim 14, **characterized in that** the pressure setpoint value for increasing the pressure in the wheel brakes (13, 14, 15, 16) is formed in the second electronic open-loop and closed-loop control unit (12) on the basis of the pressure value in the master brake cylinder (3), which is detected by means of the second electronic open-loop and closed-loop control unit (12).

16. Brake system according to one of Claims 1 to 15, **characterized in that**, when the brake system is used in a vehicle which is equipped with a hybrid drive, signals are transmitted between the first electronic open-loop and closed-loop control unit (7) with the electronic control unit (36) of the hybrid drive.

## Revendications

1. Équipement de freinage pour véhicules automobiles, comprenant :
une unité d'actionnement (1) qui se compose d'un servofrein (2) pouvant être à la fois actionné au moyen d'une pédale de frein (5) et commandé indépendamment de la volonté du conducteur ainsi qu'un maître-cylindre de frein (3) branché à la suite du servofrein (2) et auquel sont raccordés les freins de roue (13, 14, 15, 16) d'un véhicule automobile, des moyens (21) pour détecter un souhait de ralentissement du conducteur, une unité de contrôle et de régulation hydraulique (HECU) (17) pour réaliser des opérations de contrôle et de régulation (ABS, ESP, ASR, etc.) dynamiques du mouvement du véhicule, laquelle est branchée entre le maître-cylindre de frein (3) et les freins de roue (13, 14, 15, 16) et présente au moins une pompe hydraulique (24a, b), une première unité de contrôle et de régulation électronique (7) qui est associée à l'unité d'actionnement (1) et qui sert à commander le servofrein (2) ainsi qu'une deuxième unité de contrôle et de régulation électronique (12) qui est associée à l'unité de contrôle et de régulation hydraulique (HECU) (17) et qui sert à commander ses composants, **caractérisé en ce que** la première unité de contrôle et de régulation électronique (7) présente des moyens (71, 72) qui délivrent à la deuxième unité de contrôle et de régulation électronique (12) une valeur de consigne (pₛₒₗₗ) de la pression hydraulique pouvant être régulée dans l'équipement de freinage conjointement avec une instruction (St) pour activer l'unité de contrôle et de régulation hydraulique (HECU) (17).

2. Équipement de freinage selon la revendication 1, **caractérisé en ce que** la valeur de consigne (pₛₒₗₗ) représente une valeur de pression qui est supérieure à la valeur de la pression pouvant être générée par l'unité d'actionnement (1).

3. Équipement de freinage selon la revendication 1 ou 2, **caractérisé en ce que** l'activation de l'unité de contrôle et de régulation hydraulique (HECU) (17) correspond à la mise en marche de la pompe hydraulique (24a, b).

4. Équipement de freinage selon l'une des revendications 1 à 3, **caractérisé en ce que** la deuxième unité de contrôle et de régulation électronique (12) présente des moyens (121, 122) qui communiquent à la première unité de contrôle et de régulation électronique (7) un message sur la disponibilité de l'état opérationnel de la pompe hydraulique (24a, b).

5. Équipement de freinage selon la revendication 4, **caractérisé en ce que** la première unité de contrôle et de régulation électronique (7) utilise le message pour déterminer un niveau de repli et éventuellement pour alerter le conducteur.

6. Équipement de freinage selon la revendication 5, **caractérisé en ce que** le niveau de repli correspond à l'actionnement de l'unité d'actionnement (1) par la force musculaire du conducteur assistée d'une dépression.

7. Équipement de freinage selon l'une des revendications 1 à 6, **caractérisé en ce que** la deuxième unité de contrôle et de régulation électronique (12) présente des moyens (123, 124) qui communiquent à la première unité de contrôle et de régulation électronique (7) un message sur l'activité et la panne des composants de l'unité de contrôle et de régulation hydraulique (HECU) (17).

8. Équipement de freinage selon la revendication 7, **caractérisé en ce que** la première unité de contrôle et de régulation électronique (7) utilise le message pour adapter sa stratégie en vue d'intégrer les moments de freinage générateurs qui peuvent être produits par un groupe propulseur hybride du véhicule automobile.

9. Équipement de freinage selon l'une des revendications 1 à 8, **caractérisé en ce que** la deuxième unité de contrôle et de régulation électronique (12) présente des moyens (125, 126) qui communiquent à la première unité de contrôle et de régulation électronique (7) un message sur la vitesse actuelle du véhicule ainsi que sur l'immobilité du véhicule.

10. Équipement de freinage selon la revendication 9, **caractérisé en ce que** la première unité de contrôle et de régulation électronique (7) utilise le message pour optimiser la pression hydraulique générée par l'unité d'actionnement (1).

11. Équipement de freinage selon la revendication 10, **caractérisé en ce que** la première unité de contrôle et de régulation électronique (7), à l'arrêt ou lors des faibles vitesses du véhicule, limite la pression et/ou la vitesse d'établissement de la pression.

12. Équipement de freinage selon la revendication 10, **caractérisé en ce que** la première unité de contrôle et de régulation électronique (7), lors des vitesses élevées du véhicule, réalise une amplification supplémentaire de la pression et/ou de la vitesse d'établissement de la pression.

13. Équipement de freinage selon l'une des revendications 1 à 8, **caractérisé en ce que** la première unité de contrôle et de régulation électronique (7) présente des moyens qui, en cas de panne partielle de l'unité d'actionnement (1), communiquent à la deuxième unité de contrôle et de régulation électronique (12) un message sur la pression maximale disponible dans le maître-cylindre de frein (3).

14. Équipement de freinage selon la revendication 10, **caractérisé en ce que** le servofrein (2) est un servofrein à dépression pneumatique et que la pression maximale représente la valeur de la pression qui correspond à la proximité du point d'excitation du servofrein (2) dépendant de la dépression.

15. Équipement de freinage selon la revendication 14, **caractérisé en ce que** le calcul de la valeur de consigne de la pression en vue d'augmenter la pression dans les freins de roue (13, 14, 15, 16) s'effectue dans la deuxième unité de contrôle et de régulation électronique (12) au moyen de la valeur de la pression dans le maître-cylindre de frein (3) déterminée par la deuxième unité de contrôle et de régulation électronique (12).

16. Équipement de freinage selon l'une des revendications 1 à 15, **caractérisé en ce que** lors de l'utilisation de l'équipement de freinage sur un véhicule équipé d'un groupe propulseur hybride, il se produit une transmission de signal entre la première unité de contrôle et de régulation électronique (7) et l'unité de contrôle électronique (36) du groupe propulseur hybride.
